(19) Europäisches Patentamt

European Patent Office

Office européen des brevets

(11) **EP 1 062 574 B1**

(12) **EUROPEAN PATENT SPECIFICATION**

(45) Date of publication and mention
of the grant of the patent:
**21.01.2004 Bulletin 2004/04**

(51) Int Cl.⁷: **G06F 9/44**

(86) International application number:
**PCT/EP1999/001590**

(21) Application number: **99911775.7**

(22) Date of filing: **11.03.1999**

(87) International publication number:
**WO 1999/046676 (16.09.1999 Gazette 1999/37)**

(54) **DATA CONVERSION HARDWARE SUPPORT**

HARDWAREUNTERSTÜTZUNG FÜR DATENUMSETZUNG

MATERIEL EN SOUTIEN DE CONVERSION DE DONNEES

(84) Designated Contracting States:
**FI FR GB IE IT**

(30) Priority: **12.03.1998 DE 19810784**

(43) Date of publication of application:
**27.12.2000 Bulletin 2000/52**

(73) Proprietor: **TELEFONAKTIEBOLAGET L M ERICSSON (publ)**
**126 25 Stockholm (SE)**

(72) Inventors:
• **GARD, Bengt, Erik, Ingemar**
  **S-146 31 Tullinge (SE)**
• **KLING, Lars-Örjan**
  **S-152 57 Södertälje (SE)**
• **JOHNSSON, Sten, Edvard**
  **S-123 42 Farsta (SE)**

(74) Representative: **HOFFMANN - EITLE**
**Patent- und Rechtsanwälte**
**Arabellastrasse 4**
**81925 München (DE)**

(56) References cited:
**EP-A- 0 629 961          WO-A-94/01819**
**US-A- 5 168 567          US-A- 5 613 110**

• **AOE J -I ET AL: "AN EFFICIENT IMPLEMENTATION OF TRIE STRUCTURES" SOFTWARE PRACTICE & EXPERIENCE, vol. 22, no. 9, 1 September 1997 (1997-09-01), pages 695-721, XP000655803 ISSN: 0038-0644**
• **HARO J ET AL: "Evaluation study of several head-of-line selection schemes for high performance non-blocking ATM switches" IEEE PACIFIC RIM CONFERENCE ON COMMUNICATIONS, COMPUTERS AND SIGNAL PROCESSING (CAT. NO.93CH3288-8), PROCEEDINGS OF IEEE PACIFIC RIM CONFERENCE ON COMMUNICATIONS COMPUTERS AND SIGNAL PROCESSING, VICTORIA, BC, CANADA, 19-21 MAY 1993, pages 327-332 vol.1, XP002114278 1993, New York, NY, USA, IEEE, USAISBN: 0-7803-0971-5**

## Description

## FIELD OF INVENTION

The present invention relates to data conversion hardware support and in particular to data conversion hardware support for use in a state copying method for software upgrade.

## BACKGROUND OF INVENTION

In performing the update of software there is usually some kind of disturbance to the operation of the system being updated. This disturbance can range from a total system shutdown during hours and possible days to a.short disruption of possibly only some limited part of the total functionality of the system, e.g., a few seconds. Conceivably, there may be no disturbance at all although this is typically not the case in real existing systems. However, for systems like communication exchanges, it is of great importance that any disturbance is small and as short as possible.

To achieve a disturbance-free update of software even with permanently long executing software modules it is a prerequisite that new software is updated with all necessary data from the old software while the old software is continuously executed. When data of new software has reached the same state as data of old software the new software takes over execution.

One related example is described in WO 94/01819 and relates to a system for changing software during computer operation. In particular, the system described in WO 94/01819 differs between an initial phase, a loading phase, a test phase and a completion phase for the update of software. During the initial phase the system directs all traffic to an old software version. During the loading phase the system receives a new software version and data change information. The data change information relates to semi-permanent data for transfer of data processed by the software and related updates. Further, during a test phase the system directs test traffic through the new software version and then sample traffic in case the test traffic is successful. If the test phase is successful, the completion phase directs all new traffic to the new version. Once all old traffic still processed by the old software has come to completion, the old software version may be removed.

Still further, in EP 0 629 961 A1 there is described a method and apparatus for conversion of transferred digital data. In particular, the transferred digital data relates to the translation of information stored in a first relational database to that stored in second relational database.

Another simple method to update software is to stop the execution of old software, load new software, and finally to start the new software. Using this method no data is transferred between the old software and the new software. Further, all established software processes are lost and the execution of software is stopped during the load and start of the new software. Usually, this method is used, e.g., for workstations and personal computers.

An improved approach for a communication system has been described in "Remote upgrading and updating of AXE 10 software", page 66, 67 Ericsson Review No. 2, 1996. Here, the new software is loaded while the old software is still handling establishment of services provided to subscribers. Data is transferred between old software and new software. Data variables containing data to be transferred are identified in so-called data change information and can either be of the type copy or convert. For each convert data variable a conversion program specified in the data change information is executed to achieve the transformations and to transfer the conversion output to the new software. However, during the transfer of the data necessary for already established services from the old software to the new software the establishment of additional services is stopped.

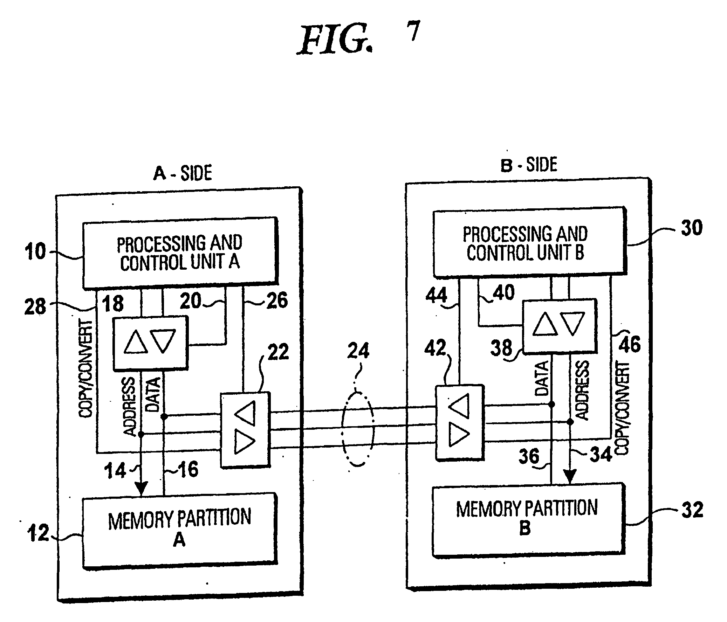

A hardware structure underlying the approaches so far is shown in Fig. 7. To enable the continuous execution of old software while new software is loaded the system architecture is partitioned into an A-side and a B-side. The A-side comprises a first processing and control unit 10 and a first memory partition 12. The memory partition 12 stores data and software modules which are executed in and controlled through the processing and control unit 10. For the interchange of data and software information there is provided an address bus 14 and a data bus 16 that are controlled by a data address bus control unit 18. This data address bus control. unit 18 is connected to the processing and control unit 10 via a data-address bus control line 20.

Further, there is provided an update bus control unit 22 that links the address bus 14 and the data bus 16 with an external update bus 24 provided for the update of software. The update bus control unit 22 is connected to the processing control unit 10 via an update bus control line 26 for control. Also an option is to forward, copy/conversion information being related to data transferred via the update bus 24 to the update bus control unit 22 via a copy/convert data line 28.

As shown in Fig. 7 the same structure as explained with respect to the A-side also applies to the B-side. Therefore, at the B-side there is provided a second processing and control unit 30 and a second memory partition 32. The second processing control unit 30 and the second memory partition 32 are connected by a second address bus 34 and a second data bus 36 both being controlled by a second data address bus control unit 38. This second data bus control unit 38 is connected to the second processing and control unit 30 via a second data/address bus control line 40. To achieve the external exchange of data there is provided a second update bus control unit 42 that is connected to the second processing and control unit 30 via a second update bus control line 44. Copy/convert data to be transferred to and from the A/B-side, respectively, is forwarded to the second update bus control unit 42 via a second copy/convert data line 46.

As shown in Fig. 7 this bipartitioned architecture allows for further execution of old software while the new software is loaded and data variables containing data to be transferred are copied and converted either from the A-side to the B-side or vice versa.

However, a problem with this approach is-that the overall system characteristics are deteriorated during the update of the software. In particular, usually during the transfer of data, services are stopped in order to get a consistent copy of data in the old software and the new software.

A further disadvantage with respect to the bipartitioned architecture shown in Fig. 7 is that there is no dedicated hardware support for data conversion. Therefore, the software based conversion of data may become time-consuming and lead to increased system downtimes and thus to a loss of revenues to the service provider using this hardware structure.

To overcome this drawback in US-A-5,155,837 it is proposed to switch the input of data for new services to the new software in a first step. When services in progress on the basis of the old software have all been finished, the output of data from these services in progress.is then switched from the old software to the new software. Therefore, services being related to the old software must be finished before the new software is operative and in consequence it is only possible to handle services with a short duration. Also, data conversion hardware support is not disclosed in US-A-5,155,837.

## SUMMARY OF INVENTION

In view of the above, the object of the invention is to achieve a highly efficient update of software in computer based systems.

According to the present invention, this object is achieved through a software processing system of the partitioned type according to claim 1.

Therefore, the present invention provides a hardware implementation to achieve the necessary transfer and conversion of data being related to old software and new software during the update of software in computer based systems, e.g., an updating due to added functionality and/or due to correction of faults.

## BRIEF DESCRIPTION OF FIGURES

Preferred embodiments of the present invention will be described with reference to the appended drawing in which

Fig. 1    shows the architecture of the data conversion hardware support device according to the present invention;

Fig. 2    shows different steps of the state copying method being supported through the data conversion hardware support device according to the present invention;

Fig. 3    shows a flow diagram according to the state copying method illustrated in Fig. 2;

Fig. 4    shows the architecture of the translation table storage unit shown in Fig. 1;

Fig. 5    shows an example for the inverse address calculation executed through the inverse address calculation unit shown in Fig. 1;

Fig. 6    shows another example for the inverse address calculation executed through the inverse address calculation unit shown in Fig. 1;

Fig. 7    shows an architecture for a software processing system of the partitioned type according to the technological background of the invention and

## DESCRIPTION OF PREFERRED EMBODIMENTS

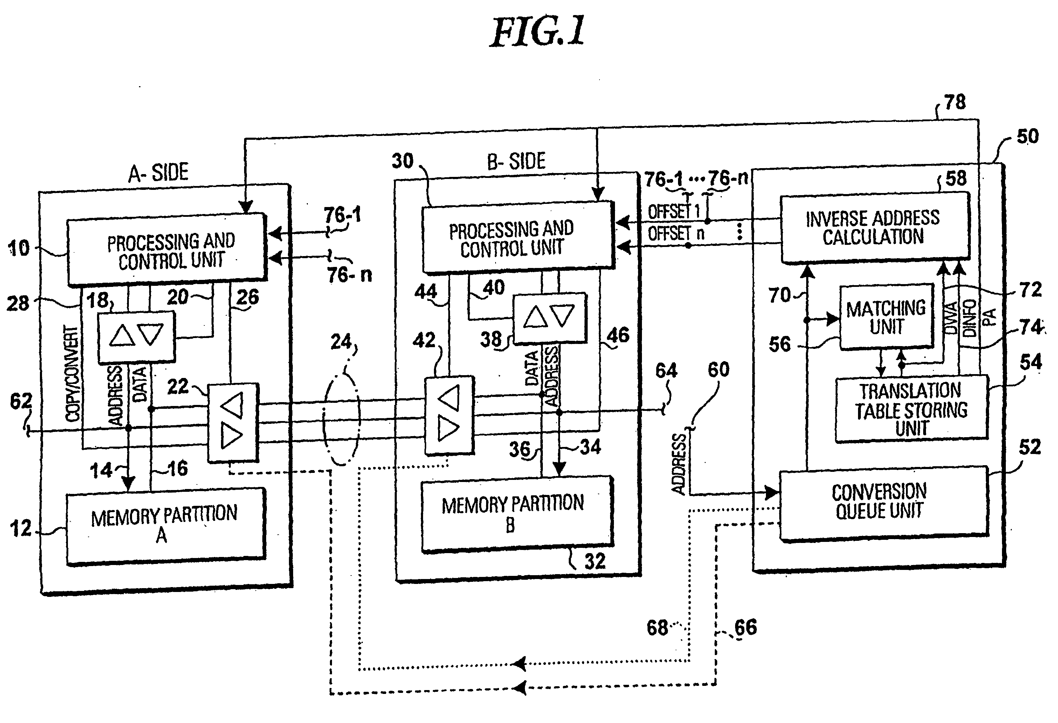

Fig. 1 shows the basic architecture for the data conversion hardware support according to the present invention. Parts resembling or being identical to those previously described with respect to Fig. 16 are denoted with the same reference numerals and their description will be omitted here.

As shown in Fig. 1, the data conversion hardware support architecture differs over previously known approaches in that there is provided a dedicated conversion support unit 50. Here, the conversion support unit 50 may be a separated unit or duplicated according to the different partitions A, B of the software processing system, i.e. the A-side and B-side, respectively. The conversion support unit 50 comprises a conversion queue unit 52, a translation table storing unit 54, a matching unit 56, and an inverse address calculation unit 58.

As shown in Fig. 1, addresses of data variables to be converted in the conversion support unit 50 are supplied thereto via an address input line 60 that is connected both to the A-side at a point 62 and the B-side partition at a point 64.

The address supplied to the conversion support unit 50 is stored in the conversion queue unit 52. This conversion queue unit 54 corresponding to an address taken from the conversion queue unit 52. To implement the search in the translation table storing unit 54 efficiently there is provided a matching unit 56 wherein the search in the translation table is realized as search for the highest DWA lower than or equal to the given address supplied from the conversion queue unit 52 via an address supply line 60.

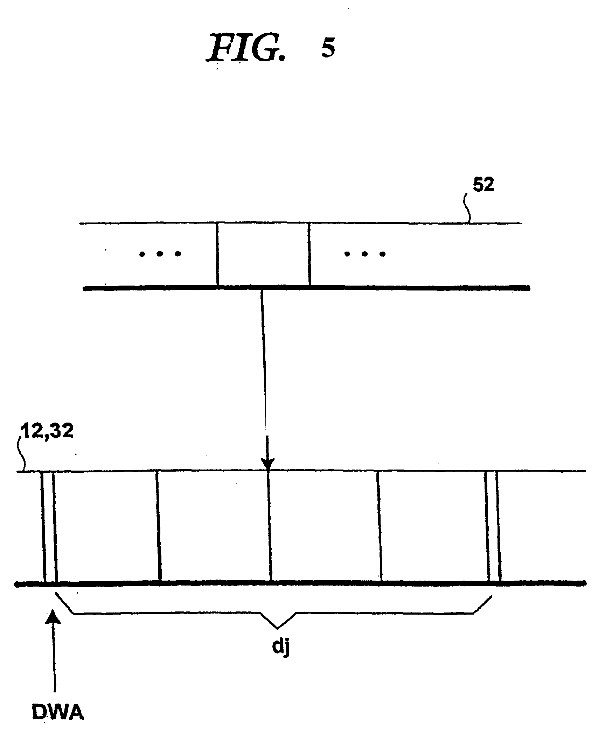

In particular, in a special case a matching unit 56 implements the search using a binary tree as will be explained in the following in more detail with respect to Fig. 5 to 12.

As soon as the address of the data variable to be converted and information with respect to the related data structure is available it is supplied to the inverse address calculation unit 58 via an address supply line 70, a DWA supply line 72 and a DINFO supply line 74. Using this information the inverse address calculation unit 58 derives additional information with respect to the variable to be converted, e.g., the index in an array or the indices for a matrix.

Generally, the result may consist of N indices that are supplied either to an A-side or a B-side via offset supply lines 76-1, ..., 76-N, respectively. Also, the address of the conversion program effective to actually carry out the conversion in either the first processing control unit 10 or the second processing and control unit 30 is supplied thereto via a conversion program address line 78 shown in Fig. 1.

As shown in Fig. 1, the data conversion hardware support uses the update bus 24. Here, the address is transferred between the A-side and the B-side or vice versa. The address is used to write into the updated loaded memory partition 32 or 12, respectively. At each side there is provided arbitration logic (not shown) for memory partition access as there are independent users of the memory partition at the side to be updated.

In case a delayed start of conversion programs is desired, according to the present invention the conversion support unit 50 may also comprise an associated buffer unit (not shown) that may be added to store the result of translation achieved through the matching unit 56 and the inverse address calculation unit 58. In this case the associated buffer unit delays the actual start of the conversion program. If the associated buffer unit never stores the same entry twice it may be guaranteed that the same conversion will not be started several times during a prespecified delay interval.

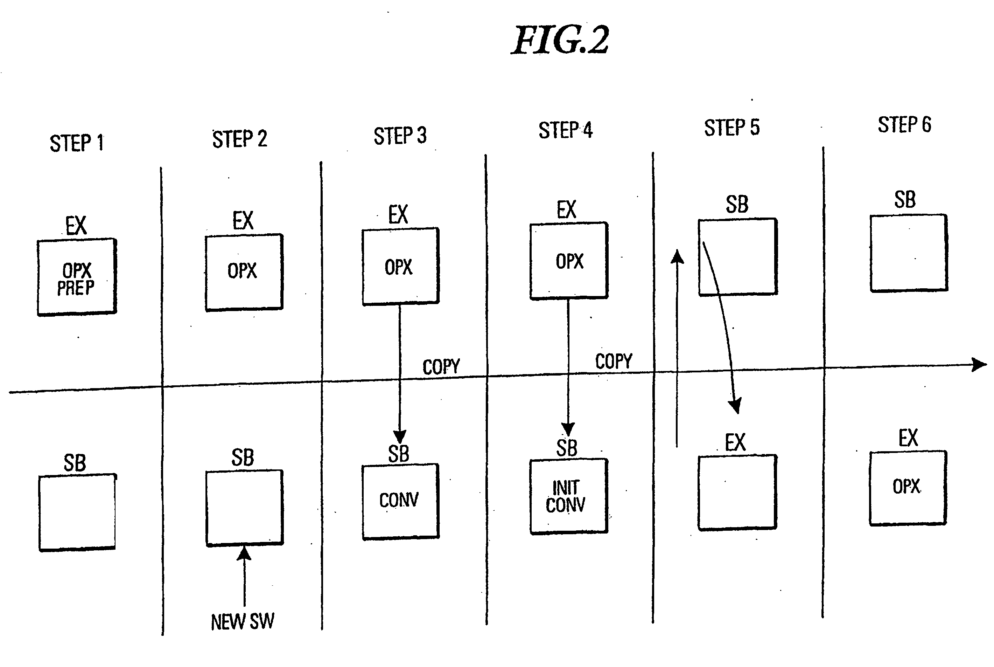

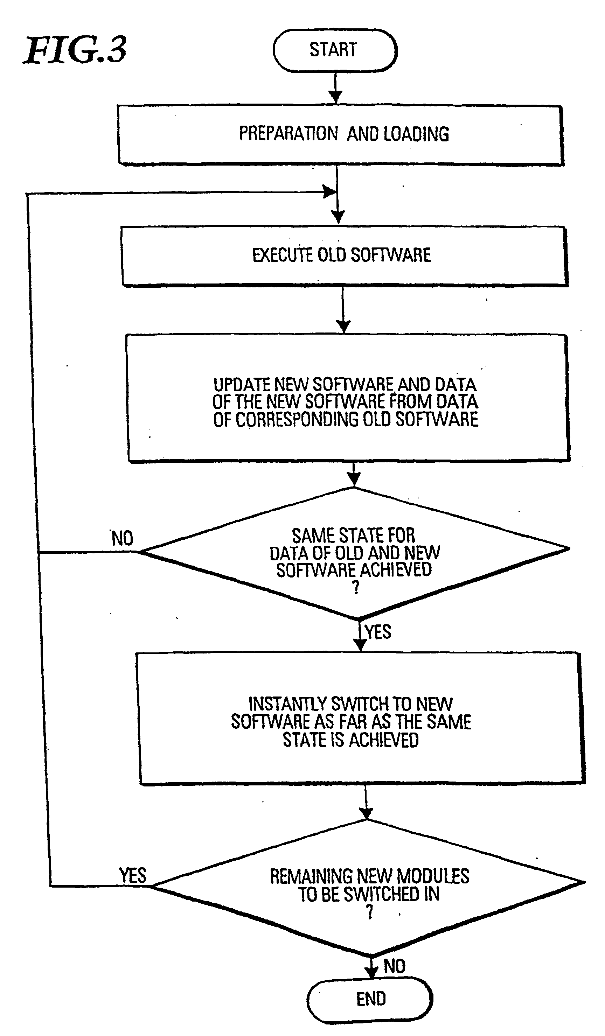

Using the hardware structure described above the basic process carried out for conversion will be explained with respect to Fig. 2 and 3. Without restriction to the scope of invention for the purpose of explanation it will be assumed that data is transferred from the A-side to the B-side and that new software is loaded into the B-side memory partition.

As shown in Fig. 2, in a first step 1 both sides A and B are executing a parallel synchronous modus and execute the same software. Further, step 2 shown in Fig. 2 relates to the loading of new software into the B-side while the execution of the old software is continued in the first processing and control unit 10. In step 3 the first processing and control unit 10 performs the copying of data from the A-side to the B-side.

As shown in the lower part being related to step 3, data may not only be copied but also be converted during the transfer to the B-side according to the present invention in the conversion support unit 50. Here, the conversion is executed parallel to and without disturbing the execution of old software in the first processing and control unit 10 to achieve the significant speed up.

As shown in Fig. 2, in step 4 the second processing and control unit 30 executes an initialization of the second memory partition 32 parallel to and without disturbance of the old software running in the first processing and control unit 10. Here, the initialization step is either carried out immediately after loading the new software to the second memory partition 32 according to step 2 or as soon as possible in case it is dependent on data copied from old software in step 3.

Further, data being related to old software may be transferred only partly and special initialization steps are executed before or immediately after switch over to the B-side to perform default initialization actions not requiring complete input of data from the old software.

As shown in Fig. 2, as soon as an appropriate state is achieved in the B-side in step 5 switching to the execution of new software through the second processing and control unit 30 is executed. Here, switch over may be executed according to single software modules immediately after the same state is achieved for corresponding software modules in both memory partitions 12 and 32, respectively. In case there exists data related to old software that is not transferred at the time of switch over due to only a partial transfer of data this data may still be transferred, if necessary, before the start of new software.

Further, as shown in Fig. 2 with respect to steps 3 and 4 the conversion support unit 50 according to the present invention is continuously operated also during the initialization step for the B-side memory partition. The reason therefore is that software is continuously executed during the update process and may rewrite data already being transferred to the conversion support unit 50. Therefore, one or several update and conversion processes are executed repeatedly in the background until switch over to new software in order to keep track of the changing state in the first memory partition 10. This repeated process may be executed by the conversion support unit 50 parallel to the initialization step for the B-side memory partition 32.

Fig. 3 shows a flowchart according to the update process explained with respect to Fig. 2. In particular, it can be seen that in connection with a preparation step new software is, loaded. According to the present invention the conversion support unit 50 is operated simultaneously in a parallel mode until switch over to the B-side takes place.

Therefore, according to the invention, the execution of the old software is not interrupted while the update of new software and transfer of data being related to old software is executed with hardware support in the conversion support unit 50.

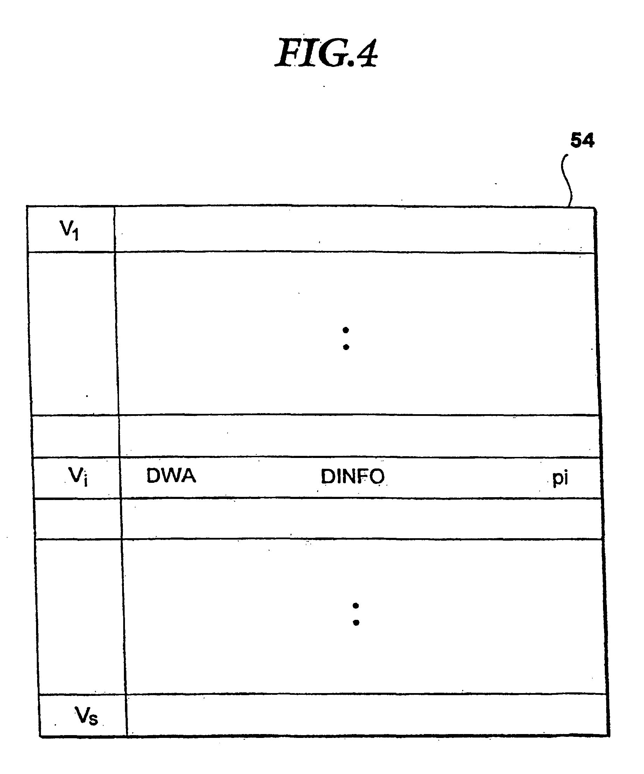

While in the above the basic outline of the hardware support for data conversion has been described with respect to Fig. 1 to 3, in the following further details in particular with respect to the translation table storing unit 54, the matching unit 56 and the inverse address calculation unit 58 will be described with respect to Fig. 4 to 15.

Fig. 4 shows the internal structure of the translation table storing unit 54. As outlined above, for each data variable that may eventually be converted through the conversion support unit 50 there is provided an entry $v_i$ in a set $V_S$ for all variables to be converted:

$$V_S = \{v_1, ..., v_i, ..., v_s\} \quad (11)$$

Each address and therefore each entry in the translation table is related to a data structure $d_j$:

$$d_j = \{n_j; DWA, ..., \alpha_i, ...;$$
$$..., DINFO, ...;$$
$$..., P_i, ...\} \quad (12)$$

Here, $n_j$ represents the number of variables in the data structure, $\alpha$ represents the address of the data variable in the data structure dj, DINFO represents structural information with respect to the variable in the data structure $d_j$, and $P_i$ represents the start address of the conversion program assigned to the respective data variable.

As is shown in Fig. 4, a translation table stores only the address DWA of the first variable of the data structure $d_j$ for each entry $v_i$ and address to be searched. In other words, for the different data variables of a data structure $d_j$ always the same start address DWA will be outputted by the translation table storing unit 54.

Further, the entry DINFO relates to structural information for the data variable to be searched, e.g., whether it is related to a one dimensional array, a two dimensional array or matrix, and any other flexible data structure.

The third item of each entry in the translation table is the start address Pi of the conversion program assigned to the data variable to be converted in either of the processing and control unit 10 and 30, respectively.

For each address $\alpha$ of a data structure supplied to the conversion support unit 50 there must be found the entry vi in the translation table having the DWA value such that

$$v_i = \{v \in V_S \mid DWA_i \leq \alpha \wedge \alpha < DWA_{i+1}\} \quad (13)$$

Fig. 5 to 13 show an embodiment of the matching unit 56 and translation table storing unit 54 particularly adapted to carry out this search in the most efficient manner.

Generally there is often the need of performing a fast search for a particular data value together with associated information in a memory which contains a great number of entries. One option is that the memory device containing the plurality of data values is searched sequentially for a particular data value and when the data value has been found, the associated information is read out. In case data values are stored randomly in the memory device the complete memory may however be searched to locate the data value.

To avoid a searching through the memory device, the data values can also be stored in the memory device according to predetermined rules,e.g., sorted which can be used later to locate the data value during the search procedure, e.g., according to a binary tree data structure.

For example, from WO 96/09580 the usage of a binary tree is known to perform a sorting of records.

As soon as the matching unit 56 described above has unveiled the entry for an address in the translation table storing unit 54, the start address DWA of the data structure $d_j$ being related to the data variable to be converted, the structural information DINFO, as well as the start address $p_i$ of the related conversion program are available in the conversion support unit 50 outlined above.

The next step is then related to the determination of indices in accordance to the data variable to be converted. Such indices enable the access to the data variable to be converted through the conversion program using a logical and not physical addresses.

During the inverse address calculation in the inverse address calculation unit 58 initially a value

$$\alpha_{inv} = \alpha - DWA \quad (12)$$

is calculated. Then the value of $\alpha_{inv}$ is split into offsets 1 ... N being related to indices in a general data structure and used by a conversion program with the start address $p_i$ to carry out an access to the data variable before actual conversion thereof using logical addressing as outlined above.

Fig. 5 illustrates the calculation of the inverse address for a one-dimensional array. Here the data structure $d_j$ with the data variable $\alpha$ to be converted has the address DWA assigned to the initial index thereof. Therefore, after the calculation of the difference between $\alpha$ and DWA the structural information DINFO storing the length of each data variable in the one dimensional array is used to determine the index of the data variable. In particular, this index is derived by dividing the difference between $\alpha$ and DWA with the length of each data variable in the one dimensional array.

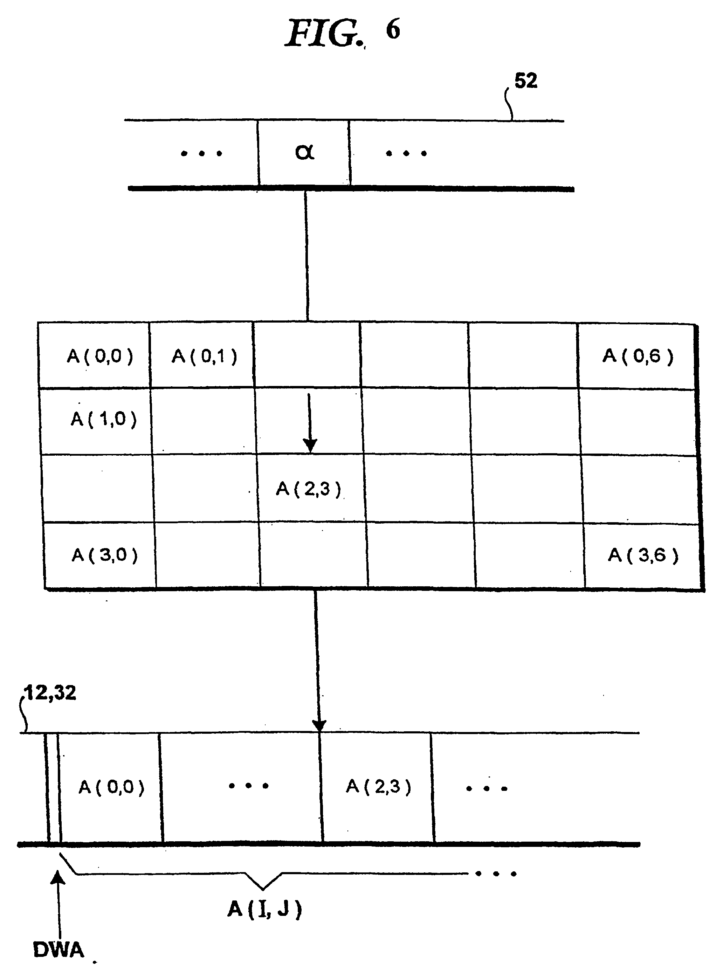

Fig. 6 shows a further example being related to the inverse address calculation for of two dimensional array or matrix. It is assumed that the matrix A(I, J) is dimensioned such that I ranges from 0 to 3 and J ranges from 0 to 6. The upper part of Fig. 5 shows the conversion queue unit 52 handling an address $\alpha$ pointing to element A (2,3) of the matrix A.

Further, as shown on the lower part of Fig. 5 the two dimensional logical representation of the matrix A(I, J) is mapped to a linear structure in the memory partitions 12, 32. Here, DWA represents a base address of the matrix A corresponding to the matrix element A(0,0).

To determine the indices 2, 3 of the data variable it is necessary to know the base address DWA, the length of each 'data variable of the two dimensional matrix that may be stored in DINFO and also the range of indices such as first index (row) from 0 to 3 and second index (column) from 0 to 6. In case the length of each array element is known the index values may be calculated according to

$$k = \alpha - DWA$$

$$J = k - 7 \times INT(k/7)$$

$$I = INT(k/7) \qquad (13)$$

where INT(Z) is the integer part of Z, e.g., INT(12/7) = 1, and the constant 7 is derived from the range of the second index (number of columns) and the length of each element (1). Thus, if the base address of A is 1000, the address 1017 corresponds to

$$J = 17 - 7 \times INT(17/7) = 3$$

$$I = INT(17/7) = 2, \qquad (14)$$

i.e. the memory address 1017 corresponds to A(2,3).

Using this approach the inverse address calculation can be extended to any number of indices and lengths of array elements. For instance, if the element length is two memory words, the constant 7 in the formulas for I and J should be replaced by $2 \times 7 = 14$. If each word of such two word array elements can be accessed, the formulas can be modified to calculate the high and low word of each element by taking REM(Z) as remainder part of Z.

While in the above the present invention has been described with respect to the transfer of variables on the basis of variable addresses also a higher level address could be used as well. This higher level address could consist of the program unit number and base address of the variable and value of any indices if applicable. This option of the invention would simplify the conversion hardware as the matching unit 56 could be simpler and the inverse address calculation unit 58 would not be needed. However, the translation from the program unit number and base address of the variable to the program unit number and the start address of the conversion program would still be necessary. Nevertheless, one advantage with this higher level conversion approach is that the capacity obtainable for conversions increases.

**List of reference numerals**

| | |
|---|---|
| 10 | First processing and control unit |
| 12 | First memory partition |
| 14 | First address bus |
| 16 | First data bus |
| 18 | First data address bus control unit |
| 20 | First data address bus control line |
| 22 | First update bus control unit |
| 24 | Update bus |
| 26 | First update bus control line |
| 28 | First copy/convert data line |
| 30 | Second processing and control unit |
| 32 | Second memory partition |
| 34 | Second address bus |
| 36 | Second data bus |
| 38 | Second data address bus control unit |
| 40 | Second data address bus control line |
| 42 | Second update bus control unit |
| 44 | Second update bus control line |
| 46 | Second copy/convert data line |
| 50 | Conversion support unit |
| 52 | Conversion queue unit |
| 54 | Translation table storing unit |
| 56 | Matching unit |
| 58 | Inverse address calculation unit |
| 60 | Address input line |
| 62 | First address connection line |
| 64 | Second address connection line |
| 66 | First backpressure signaling line |
| 68 | Second backpressure signaling line |
| 70 | Address supply line |
| 72 | DWA supply line |
| 74 | DINFO supply line |
| 76-1 to 76-N | Offset supply lines |
| 78 | Conversion program address line |
| 82 | Readout unit in matching unit |
| 84 | Comparison unit in matching unit |
| 86 | Determining unit in matching unit |

**Claims**

1. Software processing system of the partitioned type, comprising:

 a) a first partition (A) with a first memory means (12),

b) a second partition (B) with a second memory means (32), wherein

c) the first partition (A) and the second partition (B) are connected through a linking means (24) **characterized in that**

d) the first partition (A) and the second partition (B) are adapted to update a state of new software in one memory means (12;32) to the state of old software in the other memory means (32; 12) during execution of old software, and

e) the transfer of data from old software to new software is supported by a data conversion support device (50) adapted to output the start address of a conversion program being related to a data variable to be converted.

2. Software processing system according to claim 1, wherein the data conversion support device (50) outputs the start address of the conversion program to either one of a first processing and control unit (10) of the first partition (A) or a second processing and control unit (30) of the second partition (B), respectively.

3. Software processing system according to claim 1 or 2,
wherein the data conversion support device (50) is adapted to output a backpressure signal either to the first partition (A) or to the second partition (B) via a first backpressure signal line (66) and a second backpressure signal line (68), respectively, in case the number of addresses for data conversion supplied to the data conversion support device (50) exceeds the maximum number of addresses allowable.

4. Software processing system according to one of the claims 1 to 3,
wherein the data conversion support device (50) is also adapted to output at least one logical address for the access to the data variable to be converted on a logic level through the conversion program to either one of the first processing and control means (10) and the second processing and control means (30), respectively.

5. Software processing system according to one of the claims 2 to 4,
wherein the data conversion support device (50) comprises:

a) a translation table storage means (54) adapted to store address information and structural information for data variables to be converted; and

b) a matching means (56) adapted to find an entry in the translation table storage means (54) for a data variable to be converted according to the address ($\alpha$) of the data variable and the start address (DWA) of the data structure being related to the data variable.

6. Software processing system according to claim 5, wherein the translation table storage means (54) is adapted to store for each address of a data variable to be converted the start address of the related data structure (DWA), structural information (DINFO), and a start address of a related conversion program, respectively.

7. Software processing system according to claim 6, wherein the structural information (DINFO) comprises at least information with respect to the data variable length and the organization of the data structure ($d_j$) being related to the data variable to be converted.

8. Software processing system according to one of the claims 5 to 7,
wherein the matching means (56) determines the entry in the translation table storage means (54) according to

$$v_i = \{v_i \in V_S \mid DWA_i \leq \alpha \wedge \alpha < DWA_{i+1}\}.$$

9. Software processing system according to one of the claims 5 to 8,
wherein a matching means (56) is adapted to find an entry in the translation table storage means (54) through carrying out a binary search.

10. Software processing system according to one of the claims 5 to 9,
wherein the data conversion support device (50) further comprises an inverse address calculation means (58) adapted to use the information read from the translation table storage means (54) to identify a variable to be converted on a logical address level.

11. Software processing system according to claim 10, wherein the inverse address calculation means (58) is adapted to first calculate the difference between the address ($\alpha$) supplied to the data conversion support device (50) and the start address ($DWA_i$) of the identified data structure ($d_j$) and further to use the structural information (DINFO) provided from the translation table storage means (54) to derive at least one logical address offset according to the address to be converted.

**Patentansprüche**

1. Softwareverarbeitungssystem von dem partizimierten Typ, enthaltend:

   a) eine erste Partition (A) mit einer ersten Speichervorrichtung (12),

   b) eine zweite Partition (B) mit einer zweiten Speichervorrichtung (32), wobei

   c) die erste Partition (A) und die zweite Partition (B) über eine Verbindungsvorrichtung (24) verbunden sind
   **dadurch gekennzeichnet, dass**

   d) die erste Partition (A) und die zweite Partition (B) ausgebildet sind zum Aktualisieren eines Zustand einer neuen Software in einer Speichervorrichtung (12; 32) zu dem Zustand einer alten Software in der anderen Speichervorrichtung (32; 12) während der Ausführung der alten Software, und

   e) der Transfer von der alten Software zu der neuen Software durch eine Datenumsetz-Unterstützungseinrichtung (50) unterstützt wird, ausgebildet zum Ausgeben der Startadresse eines Umsetzprogramms im Zusammenhang mit einer umzusetzenden Datenvariablen.

2. Softwareverarbeitungssystem nach Anspruch 1, wobei die Datenumsetz-Unterstützungseinrichtung (50) jeweils die Startadresse des Umsetzprogramms ausgibt zu entweder einer ersten Verarbeitungs- und Steuereinheit (10) der ersten Partition (A) oder einer zweiten Verarbeitungsund Steuereinheit (30) der zweiten Partition (B).

3. Softwareverarbeitungssystem nach Anspruch 1 oder 2, wobei die Datenumsetz-Unterstützungseinrichtung (50) ausgebildet ist zum Ausgeben eines Reaktionssignals entweder zu der ersten Partition (A) oder der zweiten Partition (B) jeweils über eine erste Rücksignalleitung (66) und eine zweite Rücksignalleitung (68), in einem Fall, dass die Zahl der Adressen für die Datenumsetzung, zugeführt zu der Datenumsetz-Unterstützungseinrichtung (50), die maximale Zahl zulässiger Adressen' übersteigt.

4. Softwareverarbeitungssystem nach einem der Ansprüche 1 - 3, wobei die Datenumsetz-Unterstützungseinrichtung (50) ebenso ausgebildet ist zum Ausgeben zumindest einer Logikadresse für den Zugang zu der umzusetzenden Datenvariablen auf einen Logikpegel über ein Umsetzprogramm jeweils entweder zu der ersten Verarbeitungs- und Steuervorrichtung (10) und der zweiten Verarbeitungs- und Steuervorrichtung (30).

5. Softwareverarbeitungssystem nach einem der Ansprüche 2 - 4, wobei die Datenumsetz-Unterstützungseinrichtung (50) enthält:

   a) eine Übersetzungtabelle-Speichervorrichtung (54), ausgebildet zum Speichern von Adressinformation und Strukturinformation für umzusetzende Datenvariable; und

   b) eine Abstimmvorrichtung (56), ausgebildet zum Auffinden eines Eintrags in der Übersetzungstabellen-Speichervorrichtung (54) für eine umzusetzende Datenvariable gemäß der Adresse ($\alpha$) der Datenvariable und der Startadresse (DWA) der Datenstruktur, die im Zusammenhang mit der Datenvariable steht.

6. Softwareverarbeitungssystem nach Anspruch 5, wobei die Übersetzungstabellen-Speichervorrichtung (54) ausgebildet ist zum Speichern, für jede Adresse einer umzusetzenden Datenvariable, jeweils der Startadresse der betreffenden Datenstruktur (DWA), der strukturellen Information (DINFO) und einer Startadresse eines betreffenden Umsetzprogramms.

7. Softwareverarbeitungssystem nach Anspruch 6, wobei die strukturelle Information (DINFO) zumindest Informationen im Hinblick auf die datenvariable Länge und die Organisation der, Datenstruktur ($d_j$) im Zusammenhang mit der umzusetzenden Datenvariable enthält.

8. Softwareverarbeitungssystem nach einem der Ansprüche 5 - 7, wobei die Abstimmvorrichtung (56) den Eintrag in der Übersetzungstabellen-Speichervorrichtung (54) bestimmt gemäß

   $$V_i = \{v_i \in V_S | DWA_i \leq \alpha \wedge \alpha < DWA_{i+1}\}.$$

9. Softwareverarbeitungssystem nach einem der Ansprüche 5 - 8, wobei die Abstimmvorrichtung (56) ausgebildet ist zum Auffinden eines Eintrags in der Übersetzungstabellen-Speichervorrichtung (54) durch Ausführen einer Binärsuche.

10. Softwareverarbeitungssystem nach einem der Ansprüche 5 - 9, wobei die Datenumsetz-Unterstützungseinrichtung (50) ferner eine Inversadressen-Berechnungsvorrichtung (58) enthält, ausgebildet zum Verwenden der Information, die von der Übersetzungstabellen-Speichervorrichtung (54) gelesen wird, zum Identifizieren einer umzusetzenden Variablen auf einem Logikadresspegel.

11. Softwareverarbeitungssystem nach Anspruch 10, wobei die Inversadressen-Berechnungsvorrichtung (58) ausgebildet ist, um zunächst die Differenz zwischen der Adresse ($\alpha$), zugeführt zu der Datenumsetz-Unterstützungsvorrichtung (50), und der Startadresse ($DWA_i$) der identifizierten Datenstruktur ($d_j$) berechnen, und ferner die strukturelle Information (DINFO), bereitgestellt von der Übersetzungstabellen-Speichervorrichtung (54), zum Ableiten zumindest eines logischen Adressversatzes gemäß der umzusetzenden Adresse zu verwenden.

**Revendications**

1. Système de traitement informatique du type segmenté, comprenant :

   a) une première partition (A) avec un premier moyen de mémoire (12),
   b) une seconde partition (B) avec un second moyen de mémoire (32), où
   c) la première partition (A) et la seconde partition (B) sont reliées par l'intermédiaire d'un moyen de liaison (24)
   **caractérisé en ce que**
   d) la première partition (A) et la seconde partition (B) sont conçues pour mettre à jour un état de nouveau logiciel dans un moyen de mémoire (12 ; 32) à l'état d'ancien logiciel dans l'autre moyen de mémoire (32 ; 12) pendant l'exécution de l'ancien logiciel, et
   e) le transfert de données de l'ancien logiciel au nouveau logiciel est pris en charge par un dispositif de soutien de conversion de données (50) conçu pour fournir en sortie l'adresse de début d'un programme de conversion qui est associé à une variable de données à convertir.

2. Système de traitement informatique selon la revendication 1, dans lequel le dispositif de soutien de conversion de données (50) fournit en sortie l'adresse de début du programme de conversion soit à l'une d'une première unité de traitement et de commande (10) de la première partition (A), soit à une seconde unité de traitement et de commande (30) de la seconde partition (B) , respectivement.

3. Système de traitement informatique selon la revendication 1 ou 2, dans lequel le dispositif de soutien de conversion de données (50) est conçu pour fournir en sortie un signal de contre-pression soit à la première partition (A), soit à la seconde partition (B) par l'intermédiaire d'une première ligne de signal de contre-pression (66) et d'une seconde ligne de signal de contre-pression (68), respectivement, dans le cas où le nombre des adresses destinées à une conversion de données fourni au dispositif de soutien de conversion de données (50) dépasse le nombre maximum d'adresses admissibles.

4. Système de traitement informatique selon l'une des revendications 1 à 3,
   dans lequel le dispositif de soutien de conversion de données (50) est également conçu pour fournir en sortie au moins une adresse logique destinée à l'accès à la variable de données à convertir sur un niveau logique par l'intermédiaire du programme de conversion, à l'un ou l'autre du premier moyen de traitement et de commande (10) et du second moyen de traitement et de commande (30), respectivement.

5. Système de traitement informatique selon l'une des revendications 2 à 4,
   dans lequel le dispositif de soutien de conversion de données (50) comprend :

   a) un moyen de mémorisation de table de traduction (54) conçu pour mémoriser des informations d'adresse et des informations de structure pour des variables de données à convertir, et
   b) un moyen de mise en correspondance (56) conçu pour trouver une entrée dans le moyen de mémorisation de table de traduction (54) pour une variable de données à convertir conformément à l'adresse ($\alpha$) de la variable de données et à l'adresse de début (DWA) de la structure de données associée à la variable de données.

6. Système de traitement informatique selon la revendication 5, dans lequel le moyen de mémorisation de table de traduction (54) est conçu pour mémoriser, pour chaque adresse d'une variable de données à convertir, l'adresse de début de la structure de données associée (DWA), les informations de structure(DINFO) et une adresse de début d'un programme de conversion associé, respectivement.

7. Système de traitement informatique selon la revendication 6, dans lequel les informations de structure (DINFO) comprennent au moins des informations concernant la longueur de la variable de données et l'organisation de la structure des données ($d_j$) qui est associée à la variable de données à convertir.

8. Système de traitement informatique selon l'une des revendications 5 à 7,
   dans lequel le moyen de mise en correspondance (56) détermine l'entrée dans le moyen de mémorisation de table de traduction (54) conformément à

$$v_i = \{v_i \in V_S \mid DWA_i \le \alpha \wedge \alpha < DWA_{i+1}\}.$$

9. Système de traitement informatique selon l'une des revendications 5 à 8,
dans lequel un moyen de mise en correspondance (56) est conçu pour trouver une entrée dans le moyen de mémorisation de table de traduction (54) par l'intermédiaire de l'exécution d'une recherche binaire.

10. Système de traitement informatique selon l'une des revendications 5 à 9,
dans lequel le dispositif de soutien de conversion de données (50) comprend en outre un moyen de calcul inverse d'adresse (58) conçu pour utiliser les informations lues à partir du moyen de mémorisation de table de traduction (54) pour identifier une variable à convertir sur un niveau d'adresse logique.

11. Système de traitement informatique selon la revendication 10, dans lequel le moyen de calcul inverse d'adresse (58) est conçu pour calculer d'abord la différence entre l'adresse ($\alpha$) fournie au dispositif de soutien de conversion de données (50) et l'adresse de début ($DWA_i$) de la structure de données identifiée ($d_j$) et en outre pour utiliser les informations de structure (DINFO) fournies à partir du moyen de mémorisation de table de traduction (54) pour obtenir au moins un premier décalage d'adresse logique conformément à l'adresse à convertir.

# FIG.1

EP 1 062 574 B1

# FIG.2

STEP 1    STEP 2    STEP 3    STEP 4    STEP 5    STEP 6

EX — OPX PREP

EX — OPX

EX — OPX

EX — OPX

SB

SB

SB

SB

SB — CONV

SB — INIT CONV

EX

EX — OPX

COPY    COPY

NEW SW

EP 1 062 574 B1

*FIG.3*

```
            ( START )
                |
                v
  +-----------------------------+
  |   PREPARATION  AND LOADING  |
  +-----------------------------+
                |
     +--------->|
     |          v
     |  +-----------------------------+
     |  |     EXECUTE OLD SOFTWARE     |
     |  +-----------------------------+
     |          |
     |          v
     |  +-----------------------------+
     |  | UPDATE NEW SOFTWARE AND DATA |
     |  | OF THE NEW SOFTWARE FROM DATA|
     |  | OF CORRESPONDING OLD SOFTWARE|
     |  +-----------------------------+
     |          |
     |          v
     |        /  \
     |  NO  /      \
     +----<  SAME STATE FOR
     |      DATA OF OLD AND NEW
     |      SOFTWARE ACHIEVED
     |        \   ?  /
     |          \  /
     |           | YES
     |           v
     |  +-----------------------------+
     |  |   INSTANTLY SWITCH TO NEW    |
     |  | SOFTWARE AS FAR AS THE SAME  |
     |  |     STATE IS ACHIEVED        |
     |  +-----------------------------+
     |           |
     |           v
     |         /   \
     |  YES  /       \
     +-----<  REMAINING NEW MODULES
            TO BE SWITCHED IN
              \     ?   /
                \     /
                  | NO
                  v
               ( END )
```

# FIG.4

**54**

| V₁ | | | |
|------|------|------|------|
| | | ⋮ | |
| | | | |
| Vᵢ | DWA | DINFO | pi |
| | | | |
| | | ⋮ | |
| Vₛ | | | |

# FIG.   5

## FIG. 6

**FIG. 7**